# EUROPEAN PATENT SPECIFICATION

(11) **EP 3 208 246 B1**
(45) Date of publication and mention of the grant of the patent: **13.11.2019**
(21) Application number: 17154950.4
(22) Date of filing: 07.02.2017
(51) Int. Cl.: C03C 25/32, C03C 25/30, C03C 13/06, D04H 1/46, D04H 3/10, D04H 1/10, D04H 1/4218, C08G 73/02

(54) **NEEDLE FELT OF MINERAL WOOL AND NEEDLING ADDITIVE, USE OF THE NEEDLING ADDITIVE TO NEEDLE MINERAL WOOL**
NADELFILZ AUS MINERALWOLLE UND VERNADELUNGSADDITIV, VERWENDUNG DES VERNADELUNGSADDITIVS ZUM VERNADELN VON MINERALWOLLE
FEUTRE AIGUILLETÉ DE LAINE MINÉRALE ET ADDITIF D'AIGUILLETAGE, UTILISATION D'ADDITIF D'AIGUILLETAGE POUR LA FABRICATION DE FEUTRE AIGUILLETÉ

(30) Priority: 17.02.2016 DE 102016202401
(43) Date of publication of application: 23.08.2017
(73) Proprietor: SAINT-GOBAIN ISOVER, 92400 Courbevoie (FR)
(72) Inventor: Hünig, Hagen, 68549 Ilvesheim (DE)
(74) Representative: Winter, Brandl, Fürniss, Hübner, Röss, Kaiser, Polte - Partnerschaft mbB

(56) References cited:
- WO-A1-01/94447
- WO-A1-94/16134

## Description

The present invention relates to a needle felt in accordance with claim 1 and a use of an aqueous solution or an aqueous dispersion of at least one halogen-free cationic polymer, in accordance with claim 3, as a needling additive for the manufacture of formaldehyde- and fluorine-free needle felts made of mineral wool.

Needle felts made of mineral wool are suited particularly well for heat insulation in household appliances, e.g. in ovens and stoves as well as in industrial muffle kilns.

The manufacture of such needle felts has been known to a person skilled in the art for a long time and is described, for example, in EP 363 707 A2.

In needling mineral wool felts, needling additives, so-called avivages, is to be applied to the fibers of the mineral wool felt to be needled. In the past, such avivages were mostly produced, according to EP 363 707 A2, on the basis of mineral oils, natural oils or fatty acid derivatives. In particular, avivages of high viscosity were used.

Avivages are used in order to render the fibers more supple and reduce inter-fiber friction during needling so as to prevent, if possible, tearing or breaking of the fibers during needling. Furthermore, an avivage also must be capable of binding dusts arising during the production process in order to enable processing and application of the needle felt without additional measures for dust protection.

Typically, such avivages are sprayed onto the fibers in the chute of a fiberization unit for molten glass or directly onto the felt. In doing so, a viscosity compromise has to be accepted in that, on the one hand, it is to be safeguarded that the fibers are sufficiently sprayed and, on the other hand, that during the evaporation of the carrier medium material of sufficient viscosity remains in order to ensure the aforementioned advantages during needling.

Additionally, DE 699 16 112 T2/EP 1 141 462 B1 discloses fibre lubricants as component of binder/sizing compositions for glass fibre needle mats used in the reinforcement of thermoplastic materials. Useful glass fiber lubricants according to this prior art include cationic, non-ionic or anionic lubricants and mixtures thereof. Generally, the amount of fiber lubricant can be about 1 to about 25 weight percent of the sizing composition on a total solids basis. Some examples of the many known fiber lubricants include amine salts of fatty acids (which can, for example, include a fatty acid moiety having 12 to 22 carbon atoms and/or tertiary amines having alkyl groups of 1 to 22 atoms attached to the nitrogen atom), alkyl imidazoline derivatives (such as can be formed by the reaction of fatty acids with polyalkylene polyamines), acid solubilized fatty acid amides (for example, saturated or unsaturated fatty acid amides having acid groups of 4 to 24 carbon atoms such as stearic amide), condensates of a fatty acid and polyethylene imine and amide substituted polyethylene imines, such as EMERY® 6717, a partially amidated polyethylene imine commercially available from Henkel Corporation.

Therefore, in the past particularly lubricating oils and lubricants on the basis of mineral oils were suited as avivages. However, the disadvantage in the use of such substances as needling additive was to be seen in that for the preparation of an aqueous dispersion or emulsion, considerable amounts of one or several emulsifier(s) had to be added, so that phase separation into a mineral oil phase and an aqueous phase did not already occur in the reservoir of the dispensing device of the avivage. In the past, particularly alkoxylates of alcohol and/or nonylphenols were used as emulsifiers, which, however, entail the disadvantage that in needle felts that are used for heat insulation in household appliances, e.g. ovens and stoves as well as industrial muffle kilns, they can decompose during heating, thereby splitting off formaldehyde.

However, in the past it likewise turned out that even if needle felts were treated thermally after needling for removing the needling additive, in addition to increased energy input and hence increased costs, residues of the avivage and particularly of the emulsifiers contained therein nevertheless may lead to unpleasant smell or even to a release of undesired volatile organic compounds (VOC), in particular formaldehyde, even in a final consumer.

To circumvent those difficulties various approaches were tested in the prior art. Thus, it was tried, for example, to disperse mineral oil products in water via a high-pressure dispersion mixing device such that no emulsifier had to be added. This, however, on the one hand, resulted in a great deal of technical effort and, on the other hand, did not provide the intended results.

A further approach for circumventing the problem was to be seen in that in accordance with DE 42 01 868 a thixotroping additive was added to a standard avivage on the basis of fatty acid polyglycol ester. Such a thixotroping additive has the advantage of having high static viscosity and thus maintain the fiber slings in their anchoring position obtained by the needling process while good needling properties and a good lubricating effect arise if a low moving viscosity is provided. As a result of the low viscosity as part of the effect of the needles on the felt to be needled it is possible that merely low amounts of a needling additive have to be added, the VOC emission in case of temperature effects being reduced correspondingly.

However, a disadvantage of the avivage or the needle felts of the prior art is that unpleasant smells and thermal decomposition products still occur, which is not desired particularly in the field of household appliances.

A further approach for the development of to a large extent VOC emission-free needle felts suited for households was the needling additive in accordance with DE 196 28 477 C1 and its parallel European patent EP 819 788 B1.

The documents describe a needling additive that contain an aqueous dispersion of at least one partially halogenated polymer.

According to DE 196 28 477 C1, such partially halogenated polymers may be selected from the group consisting of:
halogenated synthetic oils, fluorinated, in particular perfluorinated synthetic oils, chlorinated, particularly perchlorinated synthetic oils, brominated, particularly perbrominated synthetic oils;
halogenated polyethers, fluorinated, particularly perfluorinated polyethers, chlorinated, in particular perchlorinated polyethers, brominated, in particular perbrominated polyethers;
halogenated polyesters, fluorinated, particularly perfluorinated polyesters, chlorinated, in particular perchlorinated polyesters, brominated, in particular perbrominated polyesters; and
halogenated polyols, fluorinated, particularly perfluorinated polyols, chlorinated, in particular perchlorinated polyols, brominated, in particular perbrominated polyols;
as well as mixtures thereof.

In practice, perfluorinated polyethers have turned out to be particularly well suited needling additives in accordance with DE 196 28 477 C1, on the one hand, as those ethers may bring about extremely favorable sliding properties between the fiber slings during needling and, on the other hand, that due to the fact that virtually all hydrogen atoms within the polyether system are replaced by fluorine atoms, such perfluorinated polyethers are chemically inert and also thermally resistant.

It merely was of disadvantage that the perfluorinated needling additive had to be stabilized using an inflammable solubilizing agent, particularly t-butyl alcohol, in order to keep the fluorinated polyethers in solution or dispersion.

During the investigations conducted in 1996 it turned out that, using the detection methods known at that time, formaldehyde or fluorinated inorganic or organic compounds could be detected neither in the chute nor in the later needle felt that was subjected to a temperature of up to 500°C for more than 1 hour, if a perfluorinated needling additive in accordance with DE 196 28 477 C1 was used for needling of the felt.

This likewise held for investigations during the operation of stoves insulated with needle felts that contained a perfluorinated needling additive in accordance with DE 196 28 477 C1. Typically, during the heat-up phase in the first weeks of operation of the stoves virtually no unpleasant smells occurred.

However, in meanwhile 20 years of practice it has turned out that the detection limits for formaldehyde and fluorine have decreased considerably, on the one hand, on account of far more sensitive test methods and particularly detection systems thereof available today in high-pressure liquid chromatography (HPLC) methods used in routine applications, as well as in methods of gas chromatography-mass spectrometry (GC-MS).

On the other hand, the exposition temperature of the needle felts introduced in ovens has doubled from a maximum operating temperature of approximately 250°C to today's cleaning temperature of approximately 500°C since the time of introduction of perfluorinated needling additives.

This is explained by the fact that modern stoves frequently have a so-called pyrolytic cleaning function in which through activation of pyrolysis after baking, roasting or grilling, baking, roasting or grilling residues are decomposed to ash at temperatures of up to 500°C. After cooling down the oven, the ash may be wiped away with a cloth.

Such pyrolysis constitutes extreme thermal stress to the needle felt insulation and particularly to the organic-chemical components contained therein.

In more recent investigations using high-sensitive analyzing methods it has turned out that the perfluorinated needling additive well-established in practice may lead to the release of undesired inorganic and organic components when subjected to higher thermal stress.

It was reported in some cases that during the first pyrolytic cleaning phase of the oven, pets, in particular birds, died if they were present in the kitchen during such pyrolytic cleaning phase.

On account of such findings the emission behavior of stoves insulated with needle felts that contained perfluorinated needling additives was newly examined.

In so doing, it turned out that fluorinated VOC could be proved particularly under the given high thermal stress of pyrolytic cleaning. Those low-molecular organic fluorine compounds, with the silicon of the mineral wool, may convert to volatile inorganic compounds such as SiF₄, which may then hydrolyze with the water in the ambient air to form SiO₂ and HF. The investigation of the emission behavior of such needle felts and the measurement of the fluorine content or PFC content resulted in fluorine concentrations of > 180 ppm under unfavorable conditions. Both the volatile organic fluorine compounds and in particular HF are problematic for humans and animals in terms of health and moreover are corrosive.

In light of the foregoing, there is a need in needling additives for the manufacture of needle felts of mineral wool that essentially do not emit unhealthy compounds even in modern household appliances under the conditions of an increased heat exposition of the needle felts used for heat insulation.

Further to the above cited prior art, WO 01/94447 A1 describes water dispersible hydrophobic polyalkyleneimine polyamide fiberglas lubricants being based upon polyalkyleneimine backbones having from about 20% to 60% of their reactive amino functionalities substituted by C14-20 carboxylic acids. Furthermore, fibre lubricants as well as sizing compositions comprising such polymer derivatives are also disclosed.

Additionally, WO 94/16134 A1 relates to flexible nonwoven sized and unsized mats, and particularly needled mat products, comprising physically entangled shot-free ceramic oxide/alumosilicate-based fibers, being useful, among others, in the field of thermal insulation. According to WO 94/16134 A1, a sizing material for needle punching may contain a mixture of polylethyleneimine and a polyethylene glycol compound.

Based on the prior art of DE 196 28 477 C1, it is therefore an object of the present invention to provide a needling additive for the production of needle felts of mineral wool that are suited for heat insulation of ovens, stoves and muffle kilns and that release virtually no decomposition products, in particular neither formaldehyde nor fluorinated compounds, that might be harmful to the health, even at temperatures of about 500°C, as may occur during the pyrolytic cleaning of ovens.

With regard to a needle felt, the object is solved by the characterizing features of claim 1. With respect to a use, the object is also achieved by the features of claim 3.

In particular, the present invention relates to a needle felt obtained by needling mineral wool using a formaldehyde-free and fluorine-free needling additive for the manufacture of needle felts of mineral wool, containing an aqueous solution or an aqueous dispersion of at least one halogen-free cationic polymer, wherein said polymer consists of a polymer on the basis of azacyclopropane; wherein said polymer is selected from the group consisting of: a polyethyleneimine, particularly a homopolymer of azacyclopropane with the CAS-No.:9002-98-6, a copolymer of ethan-1,2-diamine and azacyclopropane with the CAS-No.: 25987-06-8; as well as mixtures thereof; and
wherein said polymer has a weight average molecular weight (Mw) of between 500 and 3 000 Da, preferably of approximately 800 Da or 1 300 Da.

Such needling additives, on the one hand, are excellently suited for needling felts of mineral wool and fulfill all requirements posed to the manufacturing process with regard to the sliding properties of the needles of a needle beam through the fiber slings in the felt as well as a sufficiently high reduction of restoring forces of the fiber slings pushed into the interior of the felt by the needles. This results in mechanically perfect needle felts.

On the other hand, the halogen-free cationic polymers used as needling additive for the manufacture of needle felts exclusively consist of the atoms C, H and N, so that even at increased temperatures of up to 500°C during the pyrolytic cleaning phase of modern ovens, no halogen compounds, particularly fluorine compounds, and also no hydrogen fluoride can be formed.

In analyzing the gaseous products that arise from the organic applied to the fibers in heating the needle felts in accordance with the invention to 500°C, the fluorine content of the gathered emission samples was below a detection limit measured by way of GC-MS, whereas the fluorine content in the needle felts in accordance with the prior art of DE 196 28 477 C1 was above 180 ppm.

The concentration of formaldehyde in emission samples of the stoves insulated with the needle felts in accordance with the invention was below 10 ppm, so that the products fulfill the current requirements (<10 ppm) to the emission of formaldehyde in first pyrolytic cleaning, i.e. are formaldehyde-free from a practical perspective.

In heating up to approximately 500°C, the needle felts in accordance with the invention thus substantially neither release aldehydes, particularly formaldehyde and/or acetaldehyde, nor halogens or hydrogen halide, particularly HF.

In addition to the advantage of virtually emitting no formaldehyde and fluorine and/or fluorine compounds, the needling additive in accordance with the present invention has the particular advantage of not requiring any additional emulsifiers that again might have an adverse effect on the gas emission tendency of the needle felts treated with the needling additive, on account of the water solubility of the halogen-free cationic polymers used, in particular polyethyleneimines. No separation of the needling additive solutions is to be feared and the prepared solutions are stable over a period of several months.

Furthermore, no inflammable solubilizing agents such as t-butyl alcohol or the like are required so as to keep the polymers in solution.

In pilot studies on the production line, polyethyleneimine has turned out to be the halogen-free cationic polymer that is particularly suited. Especially well suited is a homopolymer of azacyclopropane (CAS No. 9002-98-6) or a copolymer of ethane-1,2-diamine and azacyclopropane (CAS-No.: 25987-06-8); as well as mixtures thereof.

Moreover, those halogen-free cationic polymers that have a weight average molecular weight (Mw) of between 500 and 3 000 Da, in particular approximately 500 Da, preferably 1 500 Da, have turned out to be particularly suited needling additives. Especially preferred are those polyethyleneimines that are copolymers of ethane-1,2-diamines and azacyclopropane and have an Mw of 800 or 1 300 Da.

Such polyethyleneimines are well known to a person skilled in the art and are commercially available.

It is a preferred embodiment of the present invention to apply the needling additive onto the fibers of the mineral wool in an aqueous solution in concentrations of 0.05 to 0.5 percent by weight, in particular 0.1 to 0.3 percent by weight, with regard to the fiber mass of halogen-free cationic polymer.

Preferably, the needling additive is sprayed onto the fibers already in the chute, following the fiberization unit. Alternatively, it may also be applied to the felt already put on a conveyor belt prior to being fed into the needling area.

The needle felts in accordance with the present invention thus are excellently suited for heat insulation in household appliances, particularly in ovens and stoves, as they, upon the initial operation in a final consumer, neither generate unpleasant smells nor decomposition products that may constitute a health risk.

Within the scope of the present invention it should be noted that the needling additive in accordance with the present invention for needling mineral wool also is suited particularly for glass wool.

Further advantages and features of the present invention are to be seen from the description of embodiments and on the basis of a comparative example.

### Devices and chemicals:

### Example 1

- Polyethyleneimine EAz1300 (CAS 25987-06-8) in water, proportion of solid content of 49.5%, weight average molecular weight 1300 g/mol, water dilutability > 1:100
- Solution with 0.2% of solid content: 2.83kg of EAz1300, 700kg of water
- Solution with 0.1% of solid content: 1.42kg of EAz1300, 700kg of water

### Example 2

- Polyethyleneimine EAz800 (CAS 9002-98-6) proportion of solid content of 93.2%, weight average molecular weight 800 g/mol, water dilutability >1:100
- Solution with 0.2% of solid content: 1.51kg EAz800, 700kg of water
- Solution with 0.1% of solid content: 0.75kg EAz800, 700kg of water

Determination of formaldehyde by way of a reaction with 2,4-Dinitrophenylhydrazine
- 2,4-Dinitrophenylhydrazine (Aldrich, CAS 119-26-6)
- Sulphuric acid (VWR, CAS 7664-93-9)
- Acetonitrile (Roth for HPLC-MS, CAS 75-05-8)
- Ammonium acetate (VWR high purity for analysis, CAS 631-61-8)
- Basic standard formaldehyde: (Hach & Lange, CAS 50-00-0) 4000ppm
- DNPH reaction solution: 400 mg 2,4-Dinitrophenylhydrazine (DNPH) with 4 ml of H2SO4 (0.5 M) solved in 1000 ml of acetonitrile (ACN)
- Water (VWR, high purity for HPLC-MS)

Emission analytics GC-MS
- Methanol (VWR, SupraSolv for GC-MS)
- Tributylamine (Aldrich CAS: 102-82-9, "reagent plus") C12H27N 185.35g/mol
- Basic standard: 7.6mg of tributylamine in 15.6837g of methanol = 480ppm
- Decanol (Aldrich, LOCAS: 112-30-1, Kp: 230°C)
- Perfluorooctane (Aldrich, CAS: 307-34-4, Kp: 103 - 104°C), C8F18, MG: 438.06 g/mol
- Basic standard: 23.1mg of perfluorooctane in 12.6029g decanol = 1833ppm
- Glass filter (VWR) held for 72h at 350°C as carrier material for calibration by way of thermodesorption
- Desorption tube, unfilled, with frit base, purified by heating at 280°C in a nitrogen stream

Production of needle felt:
- Gross density: 50 kg/m3
- Target thickness: 20mm
- Flow-rates: Glass: 591kg/h
   For 0.2% Target proportion EAz1300/EAz800 (0.2%): 419 l/h Für 0,1% Target proportion EAz1300/EAz800 (0,1%): 416 l/h
- Belt speed: 433 strokes/min
- Belt speed (receiving belt): 4,3 m/min

Determination of the emission of formaldehyde by baking out in air at 350°C and 500°C in accordance with the provisions of Stiftung Warentest (German consumer organization)

10g each of the corresponding material are positioned in a quartz glass tube and the tube is heated in a tubular furnace to 350° or 500°C. In so doing, dry, synthetic air flows through the sample for 60 min with 1l/min and the waste gas is led through washing bottles filled with water. The emission samples thus obtained are transferred to a 250 ml volumetric flask and filled with water up to a mark. Subsequently, 10 ml of the solution are transferred to a 25 ml flask and filled up with a DNPH reaction solution up to the mark. After 1 hour the sample is analyzed and evaluated.

HPLC column:
- LiChroCART 150-4,6 Purospher Star RP-18e
- Oven temperature: 35°C
- Injection volume: 50 µl
- Solvent and description of gradient:
- A: Water/5 % ACN/0.1 % CH₃COONH₄; B: MeOH,
- Flow: 0.8 ml/min
- A: 99 %, 0 min; 96 %, 5 min; 40 %, 10 min; 40 %, 20 min; 4 %, 22 min; 4 %, 25 min; 99 %, 26 min; 99 %, 30 min
- Detection parameter:
- UV: 355 nm, 25 min
- RT [min]: 19.17 min (Formaldehyde-DNPH); 22.55 min (Acetaldehyde-DNPH)
- Determination of concentration: peak area according to calibration function

Determination of volatile organic substances by way of thermodesorption GC-MS
- Calibration tributylamine in methanol: In tared desorption tubes with glass filter as carrier material 1 - 4^{∗}10⁻⁶g of a standard substance are placed, which corresponds to approximately 10 - 45mg of a basic standard in methanol,
- Conditions Thermodesorber Calibration
- Conditioning: 1min per mg of standard at 35°C, 20ml/min of helium
- Measuring: 10min at 250°C, 20ml/min of helium
- Calibration perfluoroctane in decanol: 327.2mg of basic standard with 813.6mg of decanol diluted to a content of 526ppm, in tared desorption tube with glass filter as carrier material 1 - 4^{∗}10⁻⁶g of a standard substance are placed, which corresponds to approximately 10 - 45mg of a basic standard in decanol,
- Measuring: 10min at 150°C, 20ml/min of helium

Test arrangement GC-MS:
• GCMS-QP2010 Plus Shimadzu
• Column: Rxi-624Sil MS 30m Restek
• Detector: MSD 40 - 800 AMU
• Temperature ion source: 200.00 °C
• Temperature interface :150.00 °C
• Solvent cut time: 0.80 min
• Start time: 0.90min
• End time: 61.90min
• ACQ mode: Scan
• Event time: 0.20sec
• Scan speed: 5000
• Start m/z : 41.00
• End m/z: 800.00
• In case of decanol end time 37.5min
• Injection temperature: 26.50 °C
• Injection mode : without split
• Sampling time: 1.00 min
• Input pressure: 91.1 kPa
• Total flow: 29.3 ml/min
• Column flow: 4.39 ml/min
• Temperature program:

| Rate [°/min] | Temperature [°C] | Hold time (min) |
|---|---|---|
| - | 35 | 15 |
| 2 | 60 | 5 |
| 5 | 130 | 3 |
| 10 | 190 | 2 |
| 10 | 225 | 1 |

• Tributylamine: 46.7 - 47.6min, maximum 46.9min
• Perfluorooctane: 1.1 - 1.9min, maximum 1.2min
• Integration of standard needle felt:1.0min - 51.8min
• Integration of needle felt with EAz1300 / EAz800: 2.4min - 51.8min

For determining the emissions of fluorine compounds and VOC 100-200 mg or the respective material sample were used. In table 2, results of a one-time run of the temperature program and a repeated run, five-time herein, of the temperature program are contrasted with each other, the emission for the five runs being added up. It turned out that with the fifth run the emission decreased to the range of the detection limit, so that repeated heating was terminated.

**Table 1**

| Emissions of formaldehyde according to the methods and provisions of Stiftung Warentest (German consumer organization) | | | | |
|---|---|---|---|---|
| Sample | Concentration | Temperature | Formaldehyde [ppm] | Acetaldehyde [ppm] |
| EAz₈₀₀ | 0.1 % | 350°C | 2.6 | 1.2 |
| EAz₈₀₀ | 0.1 % | 500°C | 3.3 | 1.5 |
| EAz₈₀₀ | 0.2 % | 350°C | 4.9 | 2.4 |
| EAz₈₀₀ | 0.2 % | 500°C | 6.5 | 2.9 |
| EAz₁₃₀₀ | 0.1 % | 350°C | 4.8 | 2.0 |
| EAz₁₃₀₀ | 0.1 % | 500°C | 4.3 | 3.4 |
| EAz₁₃₀₀ | 0.2 % | 350°C | 7.8 | 4.1 |
| EAz₁₃₀₀ | 0.2 % | 500°C | 8.7 | 6.8 |
| Fomblin FE 20C | 0.1 % | 350°C | 1.7 | not detected |
| Fomblin FE 20C | 0.1 % | 500°C | 3.5 | not detected |
| Fomblin FE 20C | 0.2 % | 350°C | 4.0 | not detected |
| Fomblin FE 20C | 0.2 % | 500°C | 8.2 | n. e. |

**Table 2**

| Emitted fluorine compounds / total emission of volatile organic compounds during single and multiple heating up | | |
|---|---|---|
| Needling additive | ***Single*** heating up Fluorine compounds/VOC [ppm] | ***Multiple*** heating up Sum Fluorine compounds/VOC [ppm] |
| Fomblin FE20C | 69.8/-* | 186.7/-* |
| EAz1300 | n.n./4.3 | n.n./11.7 |
| EAz800 | n.n./7.8 | n.n./13.4 |

| | | |
|---|---|---|
| *VOC signal is fully superimposed by the fluorine signal. n.n. not traceable | | |

The determined fluorine compounds are indicated as perfluorooctane.

Thus, the needle felts of the present invention are excellently suited for use as heat insulating material in modern household appliances such as ovens or stoves with pyrolytic cleaning at increased temperature.

### Comparative example in accordance with DE 196 28 477 C1

For the preparation of the formulation of needling additive an aqueous microemulsion of a perfluoroether is used, which is commercially available under the name "Fomblin FE 20C". The emulsion has a polymer proportion of approximately 20 percent by weight and is stabilized with approximately 18 percent by weight of t-butyl alcohol.

For preparation of a solution or dispersion ready to use the commercially available solution is diluted with water to a polymer proportion of approximately 12 percent by weight.

By further adding water an end concentration of approximately 0.1 and 0.2 percent by weight of perfluoropolyether is set and then sprayed onto a glass wool felt, which is then guided under a needle bank and subjected to needling, using the parameters in accordance with examples 1 and 2.

A needle felt of glass wool produced in such a manner has a gross density of approximately 50 kg/m³ and a thickness of approximately 20 mm.

By analogy of the examples 1 and 2, the needle felts thus produced were examined for the emission of formaldehyde and volatile fluorine compounds.

A formaldehyde content of 2 to 8 ppm was measured (cf. table 1). The value is below the stipulated threshold values, so that a formaldehyde-free product likewise may be assumed.

However, in measuring the needle felts of the comparative example of volatile fluorine compounds by way of GC-MS values of up to approximately 190 ppm were found (cf. table 2). It thus is to be assumed that the needle felts of the prior art, which were produced using the perfluorinated needling additive, release fluorine compounds to the environment of an oven.

## Claims

1. Needle felt obtained by needling mineral wool using a formaldehyde- and fluorine-free needling additive for the manufacture of needle felts of mineral wool, containing an aqueous solution or an aqueous dispersion of at least one halogen-free cationic polymer,
**characterized in that**
said polymer consists of a polymer on the basis of azacyclopropane; wherein said polymer is selected from the group consisting of: a polyethyleneimine, particularly a homopolymer of azacyclopropane with the CAS-No.:9002-98-6, a copolymer of ethan-1,2-diamine and azacyclopropane with the CAS-No.: 25987-06-8; as well as mixtures thereof; and
wherein said polymer has a weight average molecular weight (Mw) of between 500 and 3 000 Da, preferably of approximately 800 Da or 1 300 Da.

2. Needle felt according to claim 1, **characterized in that**, being heated to up to approximately 500°C, substantially neither aldehydes, particularly formaldehyde and/or acetaldehyde, nor halogens or hydrogen halide, in particular HF, are released.

3. Use of an aqueous solution or an aqueous dispersion of at least one halogen-free cationic polymer as a needling additive for the manufacture of formaldehyde- and fluorine-free needle felts made of mineral wool,
**characterized that**
said polymer consists of a polymer on the basis of azacyclopropane; wherein said polymer is selected from the group consisting of: a polyethyleneimine, particularly a homopolymer of azacyclopropane with the CAS-No.: 9002-98-6, a copolymer of ethan-1,2-diamine and azacyclopropane with the CAS-No.: 25987-06-8 as well as mixtures thereof, and
wherein said halogen-free cationic polymer has a weight average molecular weight (Mw) of between 500 and 3 000 Da, preferably of approximately 800 Da or 1 300 Da.

## Patentansprüche

1. Nadelfilz, erhalten durch Vernadelung von Mineralwolle unter Verwendung eines formaldehyd- und fluorfreien Vernadelungsadditivs zur Herstellung von Nadelfilzen aus Mineralwolle, enthaltend eine wässrige Lösung oder eine wässrige Dispersion von mindestens einem halogenfreien kationischen Polymer,
**dadurch gekennzeichnet, dass**
das Polymer aus einem Polymer auf der Basis von Azacyclopropan besteht; wobei das Polymer ausgewählt ist aus der Gruppe bestehend aus: einem Polyethylenimin, insbesondere einem Homopolymer von Azacyclopropan mit der CAS-Nr.:9002-98-6, einem Copolymer von Ethan-1,2-diamin und Azacyclopropan mit der CAS-Nr.: 25987-06-8; sowie Mischungen davon; und
wobei das Polymer ein gewichtsmittleres Molekulargewicht (Mw) von zwischen 500 und 3 000 Da, vorzugsweise von etwa 800 Da oder 1 300 Da aufweist.

2. Nadelfilz nach Anspruch 1, **dadurch gekennzeichnet, dass** bei Erwärmung auf bis zu etwa 500°C im Wesentlichen weder Aldehyde, insbesondere Formaldehyd und/oder Acetaldehyd, noch Halogene oder Halogenwasserstoff, insbesondere HF, freigesetzt werden.

3. Verwendung einer wässrigen Lösung oder einer wässrigen Dispersion mindestens eines halogenfreien kationischen Polymers als Vernadelungsadditiv zur Herstellung von formaldehyd- und fluorfreien Nadelfilzen aus Mineralwolle,
**dadurch gekennzeichnet, dass**
das Polymer aus einem Polymer auf Basis von Azacyclopropan besteht; wobei das Polymer ausgewählt ist aus der Gruppe bestehend aus: einem Polyethylenimin, insbesondere einem Homopolymer von Azacyclopropan mit der CAS-Nr.: 9002-98-6, einem Copolymer von Ethan-1,2-diamin und Azacyclopropan mit der CAS-Nr.: 25987-06-8 sowie Mischungen davon, und
wobei das halogenfreie kationische Polymer ein gewichtsmittleres Molekulargewicht (Mw) zwischen 500 und 3 000 Da, vorzugsweise etwa 800 Da oder 1 300 Da aufweist.

## Revendications

1. Feutre aiguilleté obtenu par l'aiguilletage d'une laine minérale en utilisant un additif d'aiguilletage exempt de formaldéhyde et de fluor pour la fabrication de feutres aiguilletés de laine minérale, contenant une solution aqueuse ou une dispersion aqueuse d'au moins un polymère cationique exempt d'halogène,
**caractérisé en ce que**
ledit polymère consiste en un polymère à base d'azacyclopropane ; dans lequel ledit polymère est sélectionné dans le groupe consistant en : une polyéthylèneimine, en particulier un homopolymère d'azacyclopropane ayant le No. CAS : 9002-98-6, un copolymère d'éthane-1,2-diamine et d'azacyclopropane ayant le No. CAS : 25987-06-8 ; ainsi que les mélanges de ceux-ci ; et
dans lequel ledit polymère présente un poids moléculaire moyen en poids (Mw) situé entre 500 et 3000 Da, de préférence d'approximativement 800 Da ou 1300 Da.

2. Feutre aiguilleté selon la revendication 1, **caractérisé en ce que**, en étant chauffé jusqu'à approximativement 500 °C, sensiblement aucun aldéhyde, en particulier le formaldéhyde et/ou l'acétaldéhyde, ni halogène ou halogénure d'hydrogène, en particulier HF, ne sont libérés.

3. Utilisation d'une solution aqueuse ou d'une dispersion aqueuse d'au moins un polymère cationique exempt d'halogène comme additif d'aiguilletage pour la fabrication de feutres aiguilletés exempt de formaldéhyde et de fluor faits de laine minérale,
**caractérisé en ce que**
ledit polymère consiste en un polymère à base d'azacyclopropane ; dans laquelle ledit polymère est sélectionné dans le groupe consistant en : une polyéthylèneimine, en particulier un homopolymère d'azacyclopropane ayant le No. CAS : 9002-98-6, un copolymère d'éthane-1,2-diamine et d'azacyclopropane ayant le No. CAS : 25987-06-8 ; ainsi que les mélanges de ceux-ci ; et
dans laquelle ledit polymère cationique exempt d'halogène présente un poids moléculaire moyen en poids (Mw) situé entre 500 et 3000 Da, de préférence d'approximativement 800 Da ou 1300 Da.
